# EUROPÄISCHE PATENTSCHRIFT

(11) **EP 1 023 211 B1**
(45) Veröffentlichungstag und Bekanntmachung des Hinweises auf die Patenterteilung: **11.10.2006**
(21) Anmeldenummer: 98955464.7
(22) Anmeldetag: 16.10.1998
(51) Int. Cl.: B60T 8/00

(54) **VERFAHREN UND VORRICHTUNG ZUM VERBESSERUNG DER STABILITÄT EINES FAHRZEUGS UND ZUM STEUERN DES BREMSDRUCKS**
METHOD AND DEVICE FOR IMPROVING THE STABILITY OF A VEHICLE AND CONTROLLING BRAKING PRESSURE
PROCEDE ET DISPOSITIF POUR AMELIORER LA STABILITE D'UN VEHICULE ET LA REGULATION DE LA PRESSION DE FREINAGE

(30) Priorität: 17.10.1997 DE 19745912; 16.12.1997 DE 19755781; 18.04.1998 DE 19817285
(43) Veröffentlichungstag der Anmeldung: 02.08.2000
(73) Patentinhaber: Continental Teves AG & Co. oHG, 60488 Frankfurt (DE)
(72) Erfinder: ROLL, Georg, D-63150 Heusenstamm (DE); WOYWOD, Jürgen, D-64542 Mörfelden (DE); WALDBAUER, Dirk, D-65817 Eppstein (DE); KLING, Wolfgang, D-60489 Frankfurt am Main (DE)
(86) Internationale Anmeldenummer: PCT/EP1998/006563
(87) Internationale Veröffentlichungsnummer: WO 1999/020506

(56) Entgegenhaltungen:
- DE-A- 19 522 632
- DE-A- 19 522 634
- DE-A- 19 546 801
- DE-C- 4 418 772

## Beschreibung

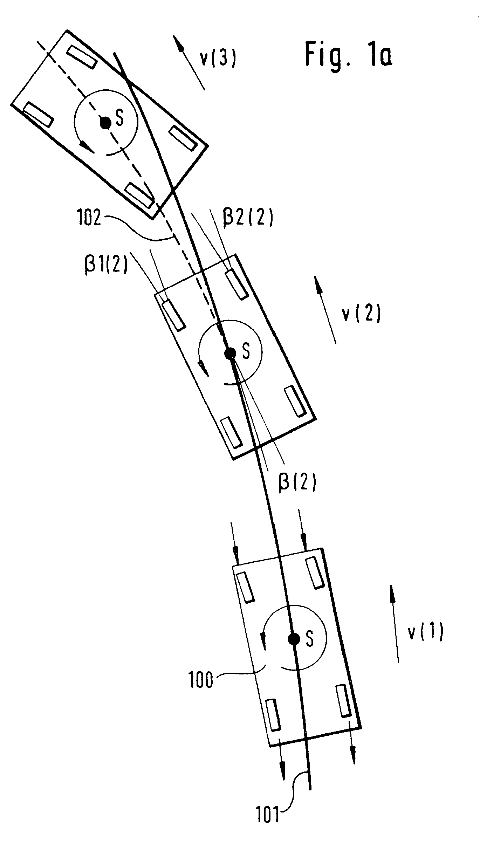

Die Erfindung betrifft ein Verfahren und eine Vorrichtung zur Verbesserung der Stabilität eines Fahrzeugs sowie zum Steuern des Bremsdrucks. Die beschriebenen Verfahren und Vorrichtung betreffen insbesondere den Bereich von Teilbremsungen, wenn also alle Räder eines Fahrzeugs mit gleichem Bremsdruck abgebremst werden bzw. wenn das ABS noch nicht eingreift. Teilgebremste Kurvenmanöver stellen im Stabilitätsgrenzbereich ein fahrdynamisches Problem dar, das von konventionellen Antiblockiersystemen nicht ausreichend beherrscht wird. Vor allem Fahrzeuge mit kurzem Radstand neigen in solchen Bremssituationen zu plötzlichem Übersteuern, das vom Fahrer schwer vorhersehbar ist und in realen Fahrsituationen nicht ausgeregelt werden kann. Anhand der Fig. 1a wird das Problem des Übersteuerns während einer Teilbremsung erläutert. Ein Fahrzeug 100 bewegt sich in der Figur von unten nach oben längs der Kurve 101 (durchgezogene Linie). Mit der Kurvenfahrt des Fahrzeugs 100 einher geht eine Drehbewegung des Fahrzeugs um dessen Hochachse. Diese Drehung um die Hochachse führt zusammen mit dem Trägheitsmoment des Fahrzeugs zu einem Drehimpuls. Zusammen mit der Abbremsung des Fahrzeugs längs der Kurve 101 ist auch der Drehimpuls um die Hochachse abzubremsen. In Fig. 1a wird angenommen, dass die Bremsung des Fahrzeugs längs der Kurve 101 in der zuunterst dargestellten Position beginnt. Durch die Abbremsung wird eine Verringerung der Geschwindigkeit v(1) auf der Kreisbahn 101 bewirkt und damit auch eine Reduzierung der Drehwinkelgeschwindigkeit des Fahrzeugs um seine Hochachse. Aufgrund des Drehimpulses ist das Fahrzeug aber bestrebt, die ursprüngliche Drehung um die Hochachse beizubehalten und damit stärker zu rotieren, als es aufgrund der sich reduzierenden Fahrzeuggeschwindigkeit erforderlich ist, was zu einer Eindrehtendenz führt. Da dieser Tendenz im Teilbremsbereich (alle Räder werden mit gleicher Bremskraft beaufschlagt) kein gegenhaltendes Moment (beispielsweise aufgrund unterschiedlicher Ansteuerung der Bremsen) entgegenwirkt, kann ein geringfügiges Eindrehen des Fahrzeugs nicht verhindert werden, da sich die Seitenführungskräfte der Räder erst als Reaktionskräfte auf den Vorgang des Eindrehens aufgrund der dann erhöhten Schräglaufwinkel aufbauen. Wenn das Fahrzeug auf diese Weise einen erhöhten Schräglaufwinkel β(2) erreicht hat, erhöht sich bei konstanter Lenkradstellung auch das Lenkmoment an der Vorderachse, und das Fahrzeug steuert auf einen engeren Kurs. Dieser engere Kurs ist durch die gestrichelte Linie 102 angegeben. Dies kann zu Instabilität und zum Drehen um die Hochachse führen, wenn bereits vorher im Stabilitätsgrenzbereich gefahren wurde.

In der oben beschriebenen Situation erfolgt ein ABS-Eingriff oft zu spät. Das ABS ist eine radindividuelle Regelung, die vergleichsweise unempfindliche Schwellenwerte bezüglich des jeweiligen Radschlupfes aufweist. ABS würde in Fig. 1a erst in der oberen Position eingreifen, wenn das Fahrzeug schon einen erheblichen Schwimmwinkel aufgebaut hat. Dann kann es durch ABS aber nicht mehr stabilisiert werden.

Bekannt ist es, eine ABS Regelung an die unterschiedlichen Bedingungen während einer Geradeausfahrt und einer Kurvenfahrt anzupassen, siehe z.B. DE-A-19 522 632. Dabei wird die Schlupfdifferenz der Hinterräder ermittelt, wenn sich das Fahrzeug im Teilbremsbereich befindet. In Abhängigkeit von dieser ermittelten Schlupfdifferenz wird unter Beibehaltung der Gesamt-Bremswirkung ein Giermoment in das Fahrzeug eingeprägt.

Aufgabe der Erfindung ist es, ein Verfahren und eine Vorrichtung zum Erkennen einer instabilen Bremsung und zum Steuern des Bremsdrucks im Teilbremsbereich anzugeben, mit denen eine instabile Bremsung erkannt bzw. weitest möglich verhindert werden kann.

Diese Aufgabe wird mit den Merkmalen der unabhängigen Ansprüche gelöst. Abhängige Ansprüche sind auf bevorzugte Ausführungsformen der Erfindung gerichtet.

Bei der erfindungsgemäßen Erkennung einer instabilen Bremsung wird nicht lediglich punktuell das Laufverhalten eines einzelnen Rades überprüft. Vielmehr wird das Laufverhalten eines linksseitigen Rades mit dem Laufverhalten eines rechtseitigen Rades verglichen, und/oder es wird der zeitliche Verlauf des Laufverhaltens eines vorzugsweise kurveninnenseitigen Rades über längere Zeit betrachtet und ausgewertet. Anhand dieser Kriterien kann eine instabile Bremsung erkannt werden, so dass geeignete Gegenmaßnahmen veranlasst werden können.

Wird eine instabile Bremsung, beispielsweise wie oben angedeutet, erkannt, kann als Gegenmaßnahme das Absenken des Bremsdrucks an zumindest einem kurveninnenseitigen Rad veranlaßt werden. Dadurch wird das kurvenäußere Rad stärker gebremst, so daß dem eindrehenden Moment aufgrund des Drehimpulses des Fahrzeugs ein auswärts drehendes Moment aufgrund der ungleichen Bremskräfte an kurveninnerem und kurvenäußerem Rad entgegenwirkt. Dadurch kann das Eindrehen des Fahrzeugs wie in Fig. 1a gezeigt (Übergang von der durchgezogenen Linie 101 auf die gestrichelte Linie 102) vermieden werden, und das Fahrzeug fährt sicher längs der vorgesehenen Kurve 101.

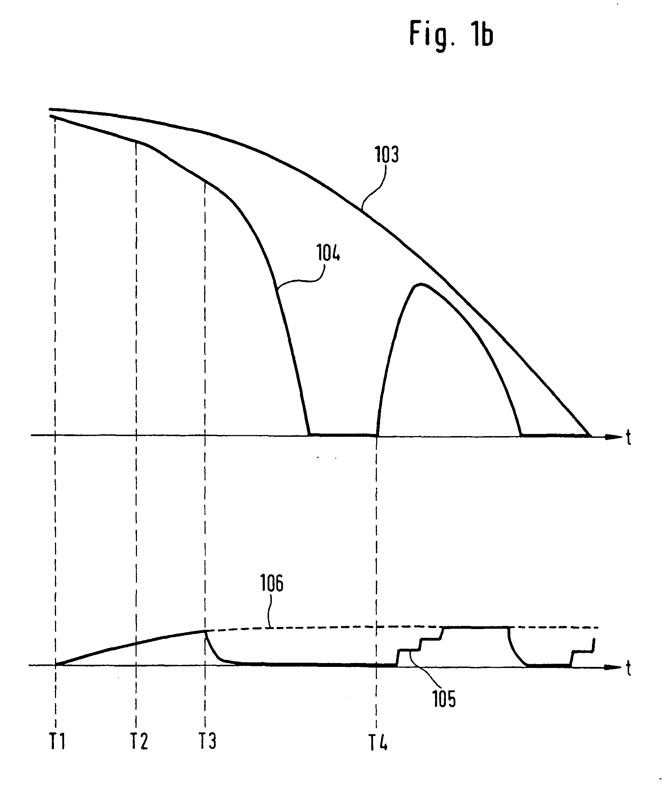

Fig. 1b zeigt eine beispielhafte Teilbremssituation im Kurvengrenzbereich, bei der der ABS-Eingriff zu spät beginnt. Das Diagramm oben zeigt in Kurve 103 die Fahrzeuggeschwindigkeit und in Kurve 104 eine beliebige Radgeschwindigkeit. Das untere Diagramm zeigt mit Kurve 105 den Radbremsdruck und mit der gestrichelten Kurve 106 im Vergleich dazu den Bremsdruck im Tandemhauptzylinder. Wenn die Radschlupfwerte ausreichen, um das ABS zu aktivieren, hat das Fahrzeug schon einen sehr großen Schwimmwinkel erreicht. Der dann an allen Rädern einsetzende Druckabbau bewirkt kein stabilisierendes Gegenmoment, da im allgemeinen keine Bremskraftdifferenz an einer Achse entsteht. Wenn ein sehr großer Schwimmwinkel aufgebaut ist (Fahrzeug beginnend querstehend), reduziert das ABS die Radbremsdrücke auf nahezu 0 bar, typischerweise zum Zeitpunkt T3 des darge-stellten Beispiels, ohne daß die Räder erneut beschleunigen können. Dies ist erst wieder möglich, wenn sich das Fahrzeug um mehr als 90° um die Hochachse gedreht hat und dann schleudert (ab Zeitpunkt T4). Das ABS ist damit nicht in der Lage, das Eindrehen des Fahrzeugs zum Kurveninneren hin zu verhindern. Die radindividuelle Blockierschutzregelung ist in diesem Fall nicht sinnvoll, da der Schlupf nur aufgrund der hohen Radschräglaufwinkel entsteht, aber nicht aufgrund einer Überbremsung. Demzufolge ist auch der Versuch, dem Schlupfeinlauf des Rades durch Druckabbau entgegen zu wirken, nicht sinnvoll, kann sogar gefährlich sein, da das Fahrzeug dann nach einer Rotation um mehr als 90° plötzlich unterbremst in die Laufrichtung der Räder schleudern kann (Zeitpunkt T4).

Anhand der Zeichnungen werden einzelne Ausführungsformen der Erfindung beschrieben. Es zeigen
- Fig. 1a:: eine Darstellung zur Erläuterung des physikalischen Hintergrunds,
- Fig. 1b: eine beispielhafte Teilbremsung mit herkömmlicher Bremsanlage,
- Fig. 2a - c: typische Verläufe von Radgeschwindigkeiten und Bremsdrücken,
- Fig. 3: schematisch in Kombination mehrere erfindungsgemäße Ausführungsformen,
- Fig. 4: eine weitere erfindungsgemäße Ausführungsform,
- Fig. 5: geschwindigkeitsabhängige Schlupf-schwellenwerte,
- Fig. 6a - d: verschiedene Bremsdruckverläufe, und
- Fig. 7: eine verzögerungsabhängige Bremsdruckabsenkung.

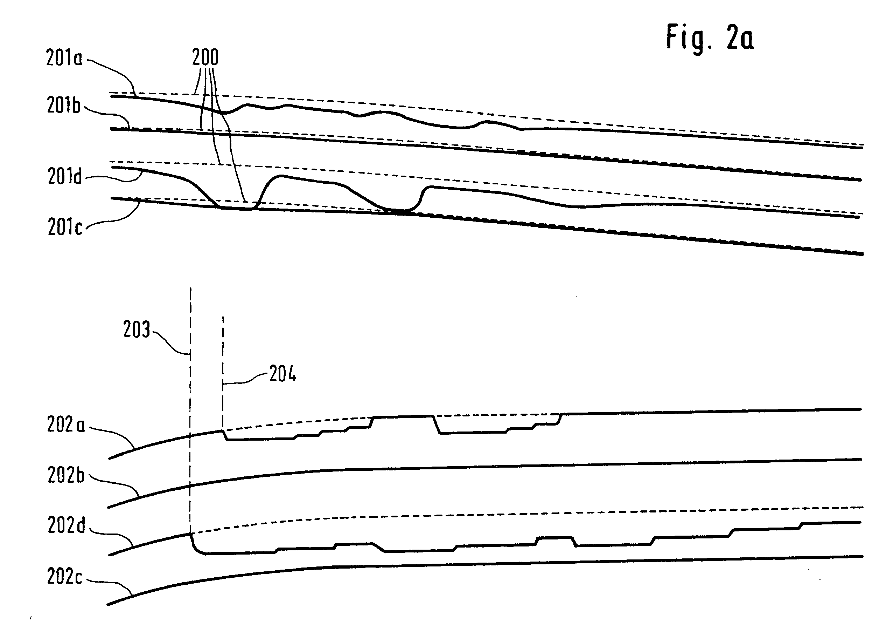

Die Fig. 2a - c zeigen verschiedene typische Zeitverläufe für einerseits Radgeschwindigkeiten und andererseits Bremsdrücke an den einzelnen Rädern. In den Figuren bezeichnet die gestrichelte Kurve 200 jeweils die Fahrzeugs-Referenzgeschwindigkeit, wie sie beispielsweise durch auf Basis von Radsensoren oder anderen Einrichtungen ermittelt wurde. Die Kurven 201a, b, c und d bezeichnen Radgeschwindigkeiten der einzelnen Räder des Fahrzeugs, 201a betrifft das Rad vorne links, 201b vorne rechts, 201c hinten rechts und 201d hinten links. Somit sind jeweils die einzelnen Radgeschwindigkeiten mit der Fahrzeug-Referenzgeschwindigkeit in Beziehung gesetzt (wobei ein Wert in seiner Dimensionierung an den anderen angepaßt wurde (Umrechnung zwischen Bahngeschwindigkeit und Winkelgeschwindigkeit)). Die Kurven 202a - d bezeichnen Bremsdrücke an den einzelnen Rädern, wobei die Zuteilung zwischen Indizes a - d und den Rädern des Fahrzeugs wie schon oben erwähnt gilt. Die durchgezogenen Linien sind dabei die tatsächlich herrschenden Radbremsdrücke, während die gestrichelten Linien der Druck im Hauptzylinder des Bremssystems zeigt.

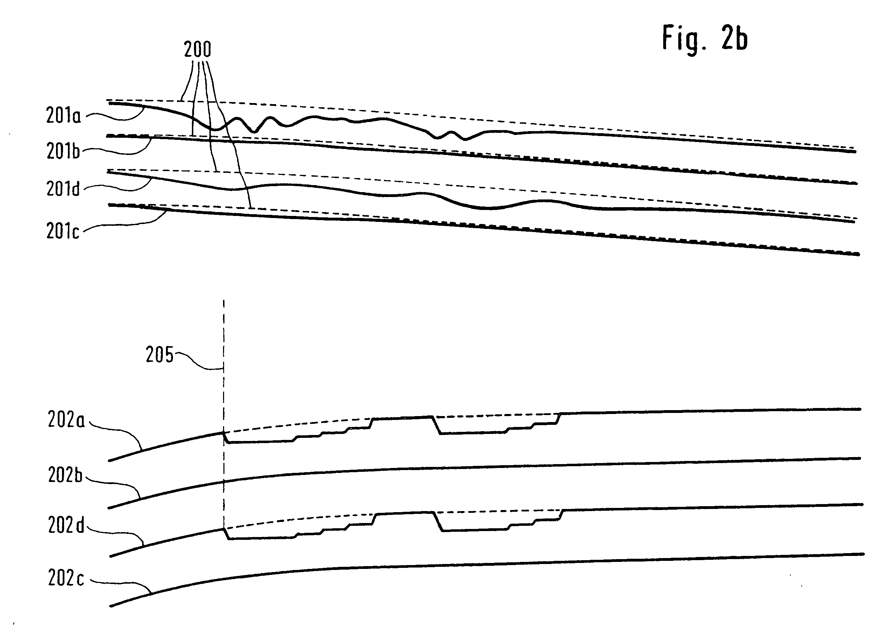

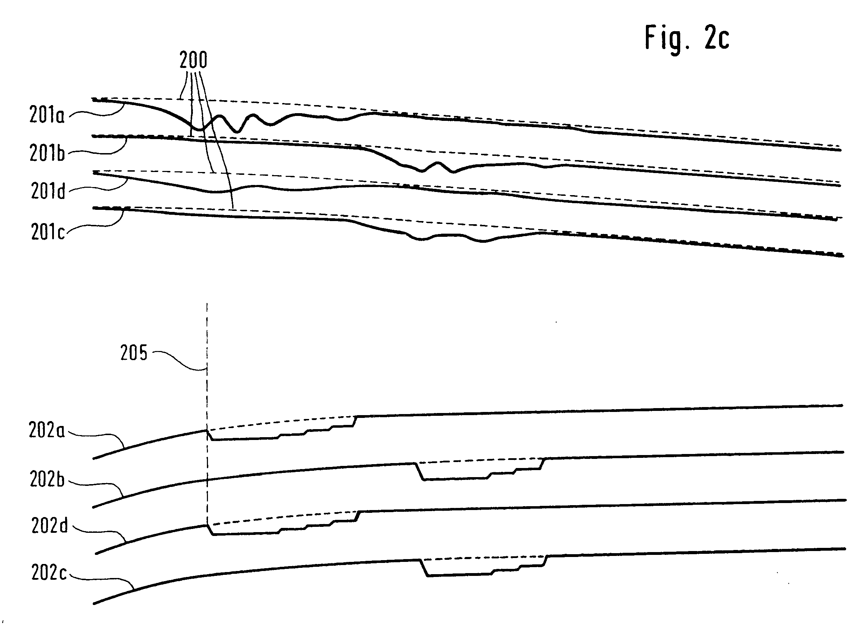

Fig. 2a zeigt ein typisches Radgeschwindigkeitsmuster für eine teilgebremste Übersteuersituation bei einem frontgetriebenen Fahrzeug. Die kurveninneren Räder (a und d) nehmen bei Bremsenbetätigung langsam wachsende Schlupfwerte an, während die äußeren Räder (b und c) zunächst stabil laufen. Insbesondere zeigen die äußeren Räder praktisch keine Schwingungen, vielmehr sind die Geschwindigkeits-verläufe glatt, d.h. die Radbeschleunigung liegt in einem engen Band zur Fahrzeugbeschleunigung. Bei den kurveninneren Rädern zeigt zumeist das weniger belastete Rad gewisse Schwingungsreaktionen und teilweise auch tiefe Schlupfeinläufe. Bei frontgetriebenen Fahrzeugen ist dies das Hinterrad (Fig. 2a, Kurve 201d), während bei heckgetriebenen Fahrzeugen das Vorderrad betroffen ist (Fig. 2b, Kurve 201a). Fig. 2c zeigt ein Spurwechselmanöver, bei dem zuerst nach links und dann nach rechts gelenkt wird. Demzufolge baut sich zuerst an den linken Rädern (a und d) und danach an den rechten Rädern (b und c) ein gewisser Schlupf auf, der dann wieder verschwindet.

Die Kurven 202a - d in den Fig. 2a - c zeigen die erfindungsgemäß veränderten Radbremsdrücke für die jeweiligen Räder. Ihr Verlauf wird später erläutert.

Die Kurven in den Fig. 2b und 2c zeigen qualitativ und ihrer Anordnung nach die gleichen Werte wie diejenigen der Fig. 2a.

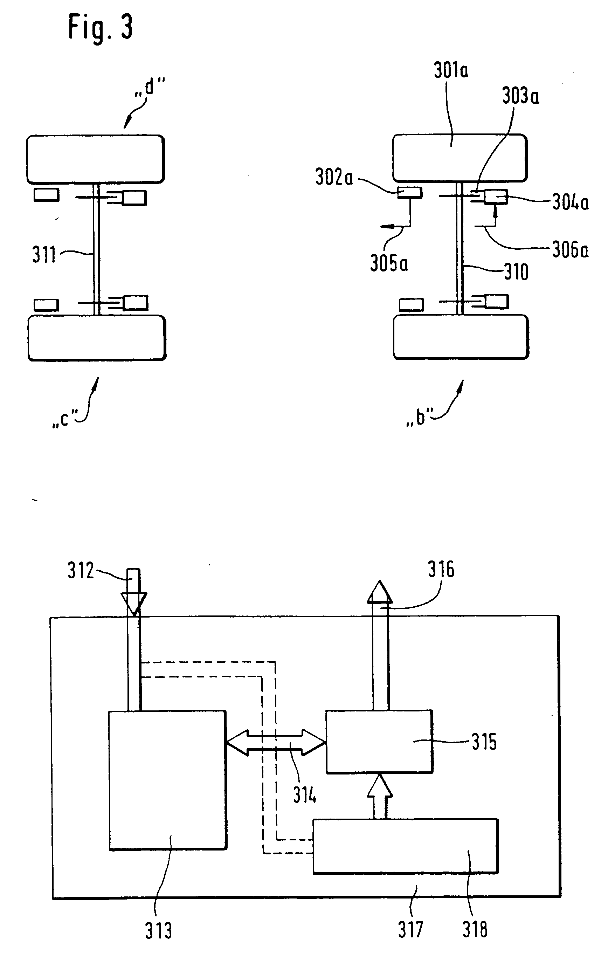

In Fig. 3 sind in Kombination schematisch mehrere erfindungsgemäße Ausführungsformen gezeigt. Oben ist schematisch ein Fahrzeug gezeigt, wobei rechts vorne ist und links hinten. 301a ist das Rad links vorne, 302a ein entsprechender Radsensor mit einer Signalleitung 305a, 303a symbolisiert die Radbremse, 304a einen hydraulischen Steuerungsteil und 306a eine Signalzuleitung zur Steuerung der Hydraulik 304a. sinngemäß die gleichen Anordnungen finden sich an den übrigen Rädern (rechts vorne mit den Indizes "b", rechts hinten mit den Indizes "c" und links hinten mit den Indizes "d"). Achse 310 ist die Vorderachse, Achse 311 die Hinterachse. 313 ist die schematische Darstellung einer erfindungsgemäßen Vorrichtung zum Erkennen einer instabilen Bremsung, 314 ein Strang von Ausgangssignalen und 315 eine schematische Darstellung einer erfindungsgemäßen Vorrichtung zum Steuern des Bremsdrucks. Diese erzeugt geeignete Signale zur Ansteuerung der Radbremsen bzw. modifiziert schon erzeugte Signale in geeigneter Weise. Sie kann beispielsweise in eine größere Vorrichtung 317 eingebettet sein. Diese Vorrichtung 317 kann eine umfassendere Bremsensteuerung bzw. -regelung 318 aufweisen, die auch das ABS umfassen kann. Die Erkennungsvorrichtung 313 empfängt einen Strang von Eingangssignalen 312, der u.a. die Signale 305a - d der Radsensoren 302a - d sowie weitere Signale, beispielsweise Fahrzeug-Referenzgeschwindigkeit v_{Ref}, enthalten kann. Der Signalstrang 314 kann ebenfalls mehrere Signale enthalten, beispielsweise ein Signal, das eine Zuordnung zwischen einerseits linke Seite/rechte Seite und andererseits kurveninnen/kurvenaußen zuläßt, ein Signal, das das Vorliegen einer instabilen Bremsung anzeigt, Signale für die zeitliche Steuerung usw. Der Ausgangssignalstrang 316 kann Signalleitungen aufweisen, die die Eingangssignale 306a - d der jeweiligen Ventile 304a - d der jeweiligen Radbremsen 303a - d betreffen.

Die Erkennungsvorrichtung 313 erkennt eine instabile Bremsung eines zweispurigen Fahrzeugs, indem entweder mittels einer Vergleichseinrichtung das Laufverhalten zumindest eines linksseitigen Rades mit dem eines rechtsseitigen Rades verglichen wird, und/oder indem der Zeitverlauf zumindest eines Rades betrachtet und ausgewertet wird.

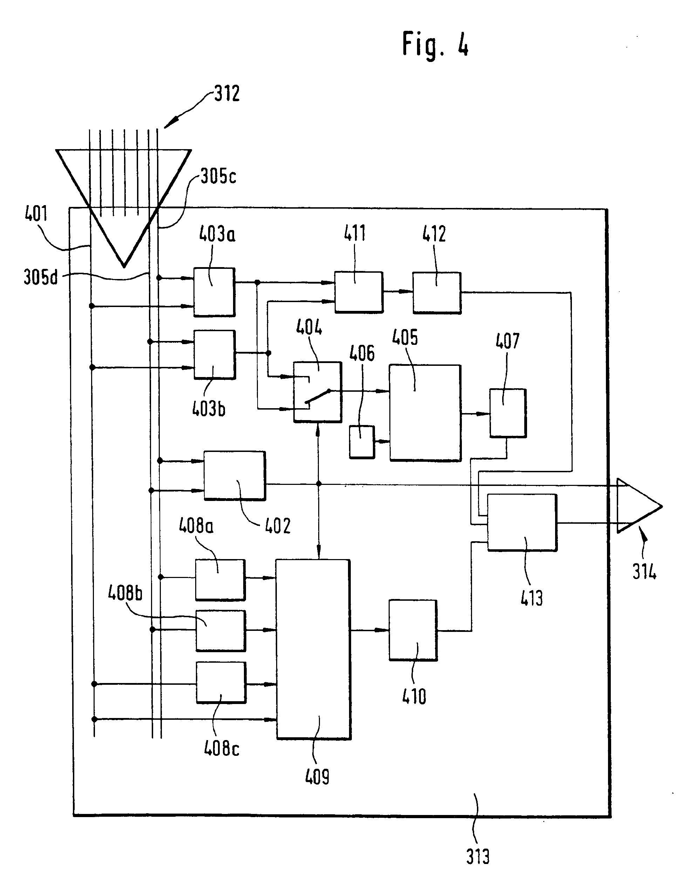

Eine konkretere Ausführungsform der Erkennungseinrichtung 313 ist in Fig. 4 gezeigt. Die Erkennungseinrichtung 313 empfängt über den Signalstrang 312 beispielsweise die Signale 305a - d der Radsensoren 302a - d, wobei beispielhaft nur die Signale 305c, d der Hinterachse gezeigt sind. 402 ist eine Ermittlungseinrichtung zur Ermittlung der Kurveninnenseite des Fahrzeugs. Sie kann beispielsweise die Radgeschwindigkeiten nicht angetriebener Räder einer Achse (bei Frontantrieb also die Hinterachse) vergleichen. Das schnellere Rad wird an der Außenseite sein, das langsamere an der Innenseite. Dies gilt auch angesichts der Tatsache, daß Schlupfeinläufe erwartet werden. Diese treten in der Regel immer zuerst und stärker an der Kurvenseite auf, da bei Kurvenfahrten wegen des Rollmoments des Fahrzeugs um die Längsachse die kurvenäußeren Räder stärker belastet sind, so daß diese noch ohne Schlupf laufen, wenn die weniger stark belasteten, kurveninneren Räder schon Schlupf aufweisen und damit langsamer sind. Anstelle der schematisch gezeigten Ermittlungseinrichtung 402 kann aber beispielsweise auch ein Lenkwinkelsensor vorgesehen sein, der ein entsprechendes Signal erzeugt.

Es ist eine Ermittlungseinrichtung 403a, b, 408a, b vorgesehen, die den Schlupf und/oder die Beschleunigung der betrachteten Räder ermittelt. 403a, b sind Schlupfer-mittlungseinrichtungen, die zum einen je ein Radsignal und zum anderen die Fahrzeug-Referenzgeschwindigkeit 401 empfangen. Daraus kann der Schlupf eines betrachteten Rades ermittelt werden (wobei unter Schlupf der Unterschied zwischen Radgeschwindigkeit und Fahrzeuggeschwindigkeit verstanden wird, so daß der Schlupf seinerseits die Dimension einer Geschwindigkeit hat).

Bezugsziffern 408a - 408c bezeichnen Beschleunigungser-mittlungseinrichtungen, die Radbeschleunigungen bzw. die Fahrzeugbeschleunigung ermitteln, indem sie als Eingangssignale die jeweiligen Radsignale 305c, d bzw. die Fahrzeuggeschwindigkeit 401 empfangen und daraus die jeweiligen Beschleunigungen herleiten. Sie können jeweils Differenzierer enthalten.

Schwingungen einer Radgeschwindigkeit können auf instabile Verhältnisse hinweisen, siehe z.B. Kurve 201a in Fig. 2b. Solche Schwingungen können beispielsweise erfaßt werden, indem Radbeschleunigungen betrachtet werden und überprüft wird, ob diese Beschleunigungen innerhalb eines bestimmten Bandes um die Fahrzeugbeschleunigung herum liegen. Vorzugsweise werden hierbei nicht punktuelle Werte zur Entscheidung herangezogen, sondern Verläufe über einen längeren Zeitraum betrachtet. Typische Schwingfrequenzen des Schlupfs liegen um die 10 Hz, so daß Beobachtungszeiträume im Bereich zwischen 10 und 300 ms, vorzugsweise zwischen 100 und 200 ms liegen können. Wenn während eines solchen Zeitfensters signifikante Abweichungen einer Radbe-schleunigung von einer Fahrzeugbeschleunigung festgestellt werden, z.B. anhand von einem oder mehreren Ausbrüchen aus einem Wertebereich um die Fahrzeugbeschleunigung herum, kann auf eine instabile Bremsung erkannt werden. 411 ist eine dritte Vergleichseinrichtung, die zusätzlich oder anstelle der ersten Vergleichseinrichtung 409 vorgesehen sein kann. Sie vergleicht direkt Schlupfwerte von Rädern miteinander, wobei der Schlupf eines linksseitigen Rades mit dem Schlupf eines rechtsseitigen Rades, vorzugsweise an der gleichen Achse, miteinander verglichen wird. Wenn diese Werte sich um einen bestimmten Betrag voneinander unterscheiden, und insbesondere wenn der Schlupf des kurveninneren Rades deutlich über dem Schlupf des kurvenäußeren Rades liegt, kann auf eine instabile Bremsung geschlossen werden. Auch hier kann über Einheit 412 der Zeitverlauf betrachtet werden.

Anhand von Fig. 4 wurden verschiedene Optionen zur Beurteilung des Bremsverhaltens beschrieben, nämlich
- Betrachtung des Laufverhaltens zumindest eines Rads über eine bestimmte Zeit hinweg (404 - 407),
- Vergleich des Schlupfs eines kurvenaußenseitigen Rads mit dem eines kurveninnenseitigen Rads (in Einheit 411), vorzugsweise über eine bestimmte Zeitdauer hinweg (Einheit 412), und
- Vergleich einer Radbeschleunigung mit einer Fahrzeugbeschleunigung über einen bestimmten Zeitraum hinweg (409, 410).

Die oben angegebenen Optionen können einzeln voneinander oder kombiniert miteinander vorgesehen sein. Die eigentliche Entscheidung darüber, ob eine instabile Bremsung vorliegt, wird durch die Erkennungseinrichtung 413 vorgenommen. Sie empfängt die Einzelsignale und verknüpft diese, gegebenenfalls nach Maßgabe weiterer Eingangssignale, zu einem Ausgangssignal, das Aufschluß darüber gibt, ob eine instabile Bremsung vorliegt.

Wenn, beispielsweise wie oben beschrieben, eine kritische Bremsung erkannt wurde, kann ein Eingriff in das Bremssystem dahingehend erfolgen, daß ein der Eindrehtendenz entgegenwirkendes Moment erzeugt wird. Dies kann dadurch geschehen, daß kurvenaußen eine stärkere Bremskraft erzeugt wird als kurveninnen. Dies kann hervorgerufen werden, indem der Bremsdruck kurvenaußen erhöht oder kurveninnen abgesenkt wird. Letzteres kann zu bevorzugen sein, da es in einer kritischen Bremssituation insgesamt sinnvoll sein kann, Bremskräfte zu verringern, anstatt sie zu erhöhen. Demnach wäre dann kurveninnenseitig der Bremsdruck abzusenken. Dadurch entsteht kurveninnenseitig eine geringere Bremskraft als kurvenaußenseitig. Dadurch ergibt sich ein kurvenauswärts wirkendes Drehmoment, das dem kurveneinwärts wirkenden Trägheitsmoment des abgebremsten Fahrzeugs entgegen und somit insgesamt stabilisierend wirkt.

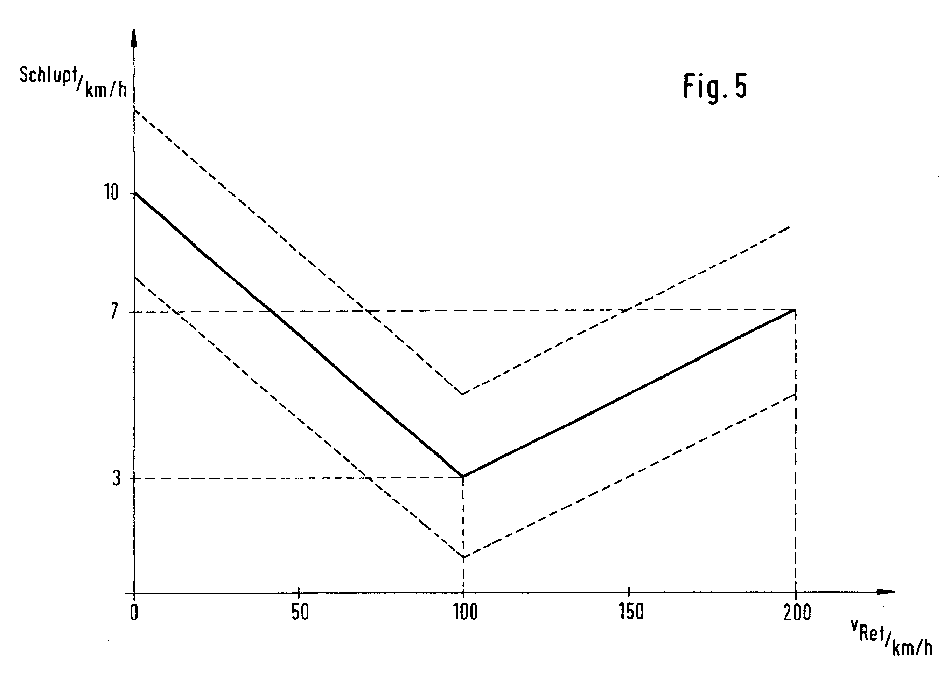

Fig. 5 zeigt beispielhaft, wie Schlupfschwellenwerte durch die Bestimmungseinrichtung 406 in Abhängigkeit von der Fahrzeugs-Referenzgeschwindigkeit gewählt werden können. Zur Optimierung der Ansprechempfindlichkeit ist es wünschenswert, die zur Entscheidung herangezogenen Schlupfschwellenwerte so zu bestimmen, daß sie bei mittleren Geschwindigkeiten (zwischen 80 und 120 km/h, vorzugsweise bei etwa 100 km/h) ein Minimum haben und links und rechts davon monoton ansteigen. Nach Maßgabe weiterer Bedingungen können unterschiedliche Kurven, beispielsweise Kurven 501, 502 oder 503 gewählt werden. Die Kurven zeigen, daß beim Minimum (also bei ca. 100 km/h) ein Schlupf von zwischen ca. 1 und 6 % und vorzugsweise etwa 3 % zugelassen wird.

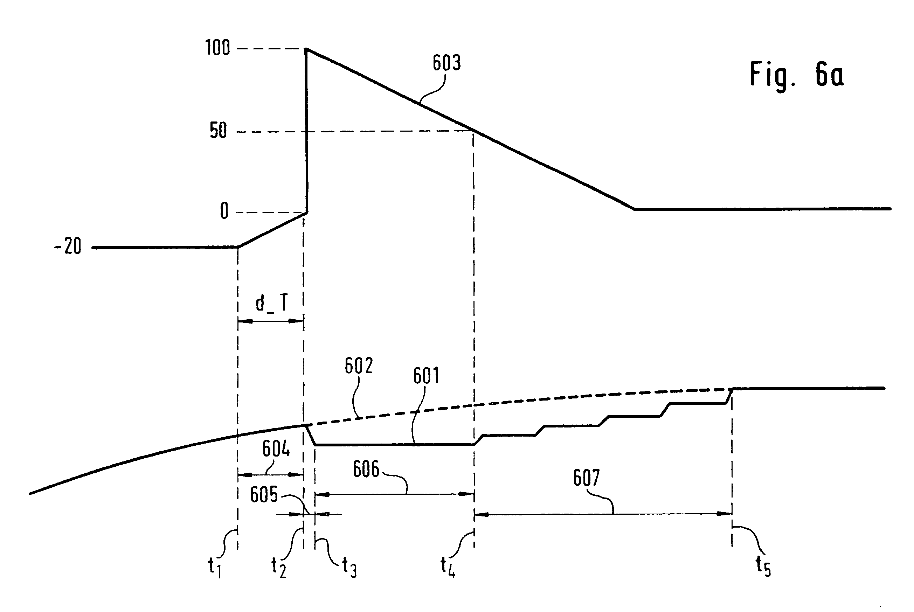

Die Fig. 6a - d zeigen mit der unteren Kurve jeweils Bremsdrücke, wie sie druch ein erfindungsgemäßes Verfahren zur Steuerung des Bremsdrucks auf das Erkennen einer kritischen Bremssituation hin verändert wurden (durchgezogene Linie) im Vergleich zum Wert, wie er ohne Veränderung durch die sonstige Bremsenregelung/Steuerung (beispielsweise 318) erzeugt worden wäre (gestrichelte Linie 602). Linie 603 zeigt den Zählstand eines Zählers, der zur Steuerung der zeitlichen Verhältnisse zur Erkennung und Drucksteuerung verwendet wird.

Im Zeitraum 604 (t₁ - t₂) erfolgt die Erkennung der kritischen Bremsung. Wenn diese erkannt ist (t₂), wird der Bremsdruck an einem kurveninnenseitigen Rad abgesenkt. Der Druck fällt dann im Zeitraum 605 (t₂ - t₃) und wird für eine bestimmte oder bestimmbare Zeitdauer konstant gehalten (Zeitraum 606, t₃ - t₄). Danach (Zeitraum 607, t₄ - t₅) wird er schrittweise wieder aufgebaut, bis er den Wert ohne die Veränderung eingenommen hat (Zeitpunkt t₅). Die Zeitdauer des Haltens des Drucks auf dem abgesenkten Wert kann auch durch den Zählerstand 603 des obenerwähnten Zählers bestimmt werden. Gezeigt ist eine Ausführungsform, bei der zu Beginn der Absenkung der Zähler auf 100 gesetzt und dann heruntergezählt wird, wobei beim Wert 50 mit dem graduellen Wiederaufbau des Bremsdrucks begonnen wird. Der Zeitraum zur Erkennung wird durch ein Hochzählen des Zählers von -20 auf 0 festgelegt.

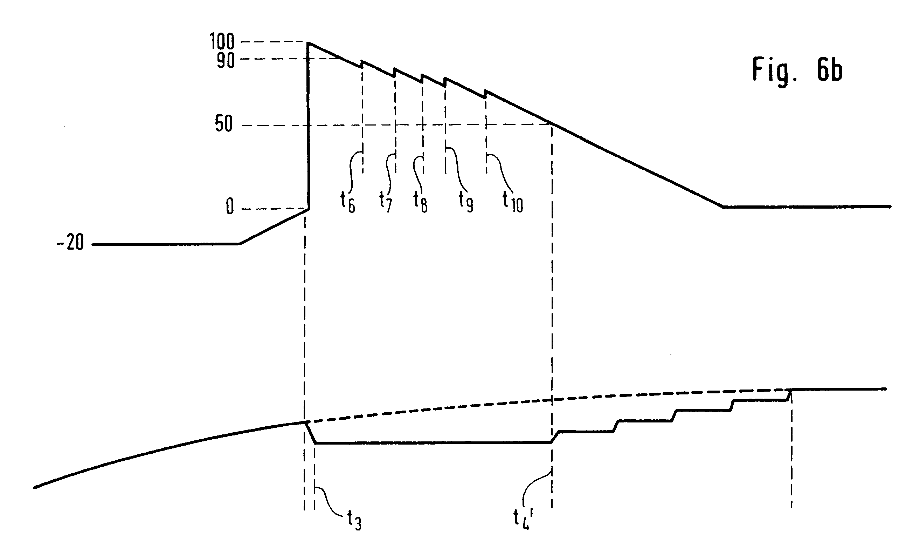

Während der Dauer der Druckabsenkung kann das Schlupfverhalten des Rades überprüft werden. Insbesondere kann überprüft werden, ob der Schlupf zurückgeht, was a priori nach einer Bremsdruckzurücknahme erwartet werden kann. Wenn der Schlupf nicht zurückgeht, kann die Dauer der Druckabsenkung verlängert werden. Dies ist in Fig. 6b gezeigt. Dort wird angenommen, daß keine oder nur eine ungenügende Schlupfabnahme festgestellt werden konnte (jeweils zu den Zeitpunkten t₆, t₇, t₈, t₉ und t₁₀). Zu diesen Zeitpunkten wird jeweils entschieden, daß die Dauer des Abgesenkthaltens des Bremsdrucks zu verändern ist. In der gezeigten Ausführungsform kann dies beispielsweise dadurch geschehen, daß der Zählerstand jeweils wieder etwas hochgesetzt wird, so daß die Zeit, bis er auf den Schwellenwert 50 heruntergezählt ist, länger dauert. Zum Zeitpunkt t₄' ist dann schließlich der Schwellenwert erreicht, und es beginnt die Phase 607 des Druckaufbaus wie in Fig. 6a.

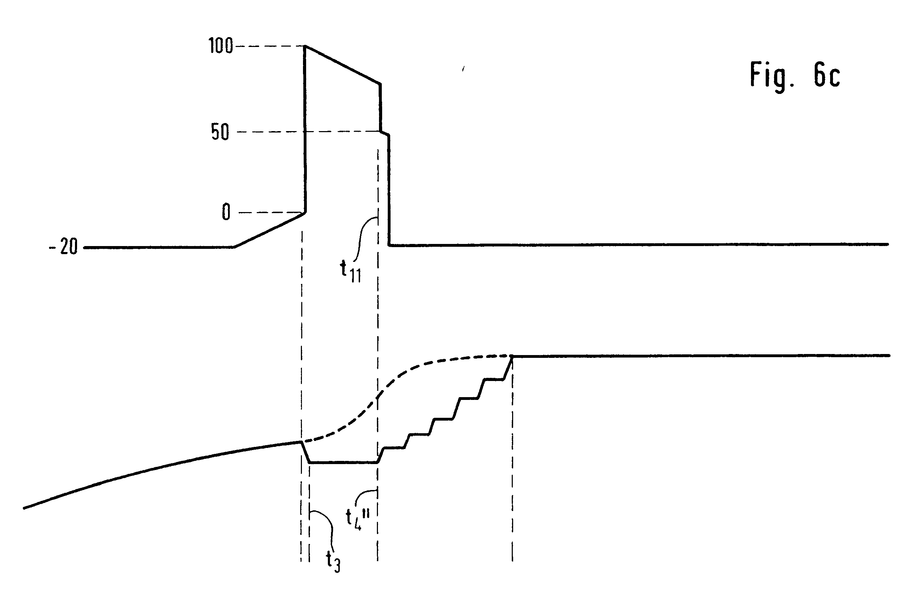

In Fig. 6c ist ein Fall gezeigt, in dem zum Zeitpunkt t₁₁ festgestellt wird, daß der Schlupf so deutlich zurück-gegangen ist, daß sofort mit dem erneuten Bremsdruckaufbau begonnen werden kann. Die Phase des Abgesenkthaltens des Bremsdrucks kann dann verkürzt oder abgebrochen werden, beispielsweise indem der Zählerstand auf den für die Entscheidung des erneuten Druckaufbaus abgefragten Schwellenwert gesetzt oder (je nach Abfrage) vollständig zurückgesetzt wird. Dann beginnt schon früher der erneute stufenweise Druckaufbau, in Fig. 6c ist dies ab dem Zeitpunkt t₄" der Fall.

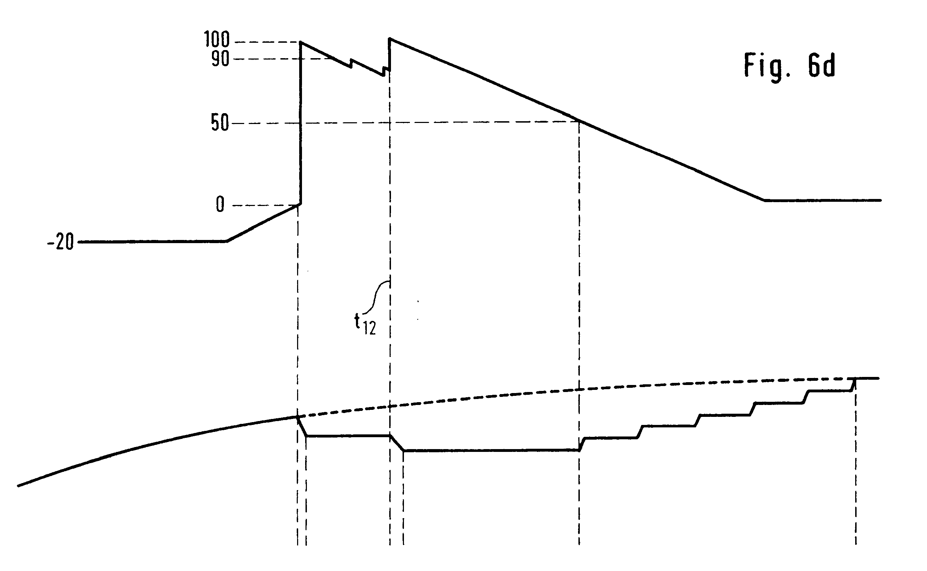

Fig. 6d zeigt schließlich den Fall, in dem die Überprüfung des Radschlupfs während der Phase des Abgesenkthaltens des Bremsdrucks ergibt, daß der Schlupf nicht wie gewünscht abnimmt oder sogar zunimmt (Abfrage zum Zeitpunkt t₁₂). Dann kann ein erneuter Druckabbau erfolgen, wodurch der Bremsdruck abermals abgebaut wird. Es schließen sich dann die gleichen Optionen an wie anhand der Fig. 6a - c beschrieben.

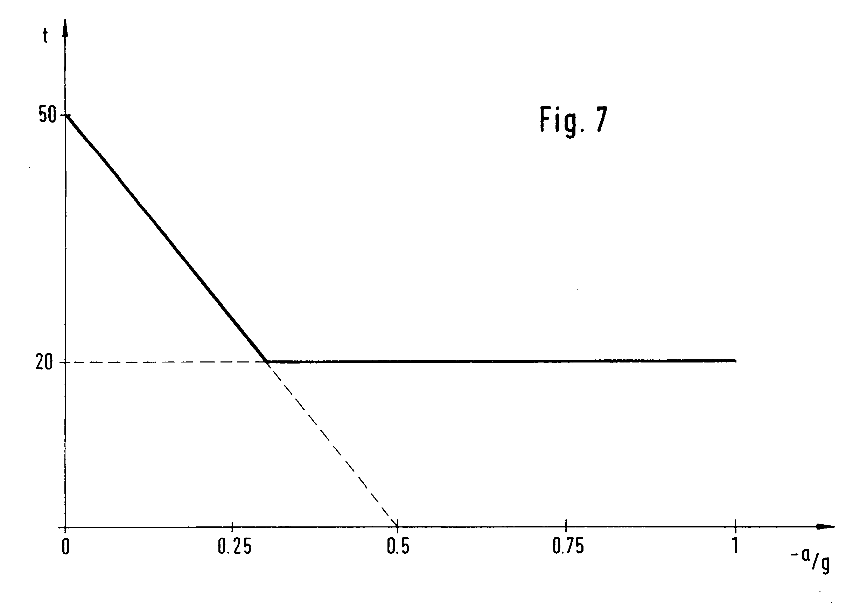

Fig. 7 zeigt ein Diagramm, das mittelbar die Druckabsenkung in Abhängigkeit von der Fahrzeug-Referenzverzögerung angibt. Unmittelbar wiedergegeben ist die Ansteuerzeit für das Auslaßventil der Radbremse, wobei die Ansteuerzeit in erster Näherung proportional zur Druckabsenkung ist. Außerdem führt eine geringere Fahrzeug-Referenzverzögerung zur Einsteuerung eines geringeren Druckes in die Radbremsen, so daß ein Druckabbau um einen bestimmten Betrag aufgrund der Volumen-Druck-Kennlinie der Bremse und der Charakteristik der Schaltventile eine längere Ventilansteuerung erfordert.

Die oben beschriebene Erkennung einer kritischen Bremsung benötigt keine zusätzlichen Sensoren. Sie wertet die (beispielsweise pulsierenden) Signale der Radsensoren 302a - d aus. Dies ist vorteilhaft, weil dann weder neue Sensoren noch neuer Verkabelungsaufwand in Kauf zu nehmen sind. Die Erkennung kann lediglich durch Ergänzungen im Steuerungsteil vorgenommen werden. Zur Auslösung der erfindungsgemäßen Bremsdurcksteuerung ist die beschriebene Erkennung einer kritischen Bremsung jedoch nicht zwingend in der beschriebenen Ausführungsform vorzunehmen. Auch andere Ausführungsformen, beispielsweise über eigene Sensoren, sind möglich.

Nachfolgend werden noch einzelne Varianten der Erfindung beschrieben:

Bei der Erkennung einer kritischen Bremsung können die kritischen Radsignale jeweils an dem oder den kurveninneren Rädern erwartet werden, die weniger belastet sind. Demzufolge werden zur Erkennung der kritischen Bremsung jeweils die genannten Räder sinnvollerweise überwacht.

Die obengenannte Erkennung einer kritischen Bremsung bzw. die sich daran anschließende Bremsdrucksteuerung betrifft den Bereich der Teilbremsung, also den Bereich, in dem das ABS noch nicht eingreift und vorzugsweise die Bremskräfte (ohne Modifikation) an allen Rädern gleich sind. Sollte das Schlupfverhalten eines einzelnen Rades so sein, daß die ABS eingreifen würde, kann das erfindungsgemäße Verfahren abgebrochen werden, das Antiblockiersystem steuert dann alleine die Bremsdrücke der einzelnen Räder.

Bei frontgetriebenen Fahrzeugen kommt im übrigen heutzutage allgemein eine elektronische Bremskraftverteilungsregelung zum Einsatz, die die Bremskraft zwischen Vorderachse und Hinterachse auch im Teilbremsbereich verteilt, so daß auch im Teilbremsbereich die Bremsdrücke nicht an allen Rädern gleich sind. Bei den hier betrachteten extremen Kurvensituationen tritt die elektronische Bremskraftverteilung normalerweise noch vor dem erfindungsgemäßen Verfahren in Kraft und wird mit seinen meist recht stark dimensionierten Druckabbauten schon stabilisierend. In der Praxis zeigt sich aber, daß die elektronische Bremskraftverteilung zwischen Vorder- und Hinterachse alleine nicht ausreicht, um das Fahrzeug in einer wirklich kritischen Kurvensituation zu stabilisieren. Daher ist es sinnvoll, bei frontgetriebenen Fahrzeugen beide Komponenten, nämlich die elektronische Bremskraftverteilung zwischen Vorder- und Hinterachse und das erfindungsgemäße Bremsdruck-steuerungsverfahren (letztendlich Bremskraftverteilung zwischen kurveninnen und kurvenaußen) zu aktivieren.

Die beschriebene Bremsdrucksteuerung kann Komponenten des Antiblockiersystems benutzen, beispielsweise Signaleingänge oder Signalausgänge.

## Patentansprüche

1. Verfahren zur Verbesserung der Stabilität eines zweispurigen Fahrzeugs während einer teilgebremsten Kurvenfahrt, bei der noch keine ABS-Regelung stattfindet, mit den Schritten Ermitteln des Laufverhaltens zumindest je eines linksseitigen und eines rechtsseitigen Rades,
**gekennzeichnet durch** eine Beurteilung der Bremssituation bei der Teilbremsung **durch** Vergleichen des Laufverhaltens zumindest eines linksseitigen Rades mit dem eines rechtsseitigen Rades und/oder Auswerten des Zeitverlaufs zumindest eines linksseitigen Rades und eines rechtsseitigen Rades, und Erkennen einer kritischen Bremsung im Teilbremsbereich anhand des Vergleichsergebnisses und/oder des Auswerteergebnisses, indem aus der Differenz der Radgeschwindigkeiten und der ermittelten Fahrzeuglängsgeschwindigkeit auf Eindrehtendenzen des Fahrzeugs geschlossen wird und diese für den Teilbremsbereich als kritisch eingestuft werden.

2. Verfahren nach Anspruch 1, **dadurch gekennzeichnet, dass** als Laufverhalten eines Rades dessen Schlupf oder dessen Beschleunigung ermittelt wird.

3. Verfahren nach Anspruch 2, **dadurch gekennzeichnet, dass** zumindest ein Schlupfschwellenwert mit dem tatsächlichen Schlupf zumindest eines Rades verglichen wird.

4. Verfahren nach Anspruch 2 oder 3, **dadurch gekennzeichnet, dass** der zeitliche Verlauf des Schlupfs auf Schwingungen hin untersucht wird und bei bestimmten Schwingungen eine kritische Bremsung erkannt wird.

5. Verfahren nach Anspruch 3, **dadurch gekennzeichnet, dass** der Schwellenwert nach Maßgabe der Fahrzeuggeschwindigkeit bestimmt wird.

6. Verfahren nach einem der vorherigen Ansprüche, **dadurch gekennzeichnet, dass** die Kurveninnenseite anhand der Geschwindigkeiten eines nicht angetriebenen linksseitigen Rades und eines nicht angetriebenen rechtsseitigen Rades ermittelt wird.

7. Verfahren nach Anspruch 6, **dadurch gekennzeichnet, dass** die Kurveninnenseite anhand der Geschwindigkeiten der Räder an der Hinterachse bestimmt wird.

8. Verfahren nach einem der vorherigen Ansprüche, **dadurch gekennzeichnet, dass** die Radgeschwindigkeit zumindest eines linksseitigen Rades mit der Radgeschwindigkeit zumindest eines rechtsseitigen Rades verglichen wird und eine kritische Bremsung erkannt wird, wenn die Radgeschwindigkeiten über eine bestimmte oder bestimmbare Zeitdauer entsprechend einem bestimmten Muster voneinander abweichen.

9. Verfahren nach einem der vorherigen Ansprüche, **dadurch gekennzeichnet, daß** es im Teilbremsbereich begonnen und im Vollbremsbereich nicht ausgeführt wird.

10. Verfahren zum Steuern des Bremsdrucks zumindest eines Rades bei einer kritischen Bremsung eines zweispurigen Fahrzeugs während der Kurvenfahrt, **gekennzeichnet durch** die Schritte Erkennen einer kritischen Bremsung des Fahrzeugs während der Kurvenfahrt, mit einem Verfahren nach einem der vorherigen Ansprüche,
Bestimmen eines kurveninnenseitigen Rades anhand der Geschwindigkeiten eines nicht angetriebenen linksseitigen Rades und eines nicht angetriebenen rechtsseitigen Rades, und Absenken des Bremsdruckes an einem oder an beiden kurveninnenseitigen Rädern auf die Erkennung hin.

11. Verfahren nach Anspruch 10, **dadurch gekennzeichnet, daß** der Betrag der Absenkung nach Maßgabe der Fahrzeugverzögerung gewählt wird.

12. Verfahren nach einem der vorherigen Ansprüche 10 oder 11, **dadurch gekennzeichnet, daß** der abgesenkte Druck eine bestimmte oder bestimmbare Zeit gehalten und dann wieder aufgebaut wird.

13. Verfahren nach Anspruch 12, **dadurch gekennzeichnet, daß** der Druck weiter abgesenkt wird, wenn nach einer Absenkung der Schlupf nicht einen bestimmten oder bestimmbaren Wert unterschreitet.

14. Vorrichtung zur Verbesserung der Stabilität eines zweispurigen Fahrzeugs während einer teilgebremsten Kurvenfahrt, bei der noch keine ABS-Regelung stattfindet, mit einer Ermittlungseinrichtung (403a, b, 408a, b) zum Ermitteln des Laufverhaltens zumindest je eines linksseitigen und eines rechtsseitigen Rades (301a - d),
**gekennzeichnet durch** eine erste Vergleichseinrichtung (409 - 412) zum Vergleichen des Laufverhaltens zumindest eines linksseitigen Rades mit dem eines rechtsseitigen Rades und/oder eine Auswerteeinrichtung (404 - 407) zum Auswerten des Zeitverlaufs zumindest eines linksseitigen Rades und eines rechtsseitigen Rades, und
eine Erkennungseinrichtung (413) zum Erkennen einer kritischen Bremsung anhand der Ausgabe der Vergleichseinrichtung und/oder der Ausgabe der Auswerteeinrichtung, indem aus der Differenz der Radgeschwindigkeiten und der ermittelten Fahrzeuglängsgeschwindigkeit auf Eindrehtendenzen des Fahrzeugs geschlossen wird und diese für den Teilbremsbereich als kritisch eingestuft werden.

15. Vorrichtung nach Anspruch 14, **dadurch gekennzeichnet, daß** die Ermittlungseinrichtung (403a, b, 408a, b) den Schlupf und/oder die Beschleunigung der betrachteten Räder ermittelt.

16. Vorrichtung nach Anspruch 15, **dadurch gekennzeichnet, daß** die Auswerteeinrichtung (404 - 407) eine zweite Vergleichseinrichtung (405) aufweist, die einen Schlupfschwellenwert mit dem tatsächlichen Schlupf zumindest eines Rades vergleicht.

17. Vorrichtung nach Anspruch 15 oder 16, **dadurch gekennzeichnet, daß** die Auswerteeinrichtung (404 - 407) den zeitliche Verlauf des Schlupfs auf Schwingungen hin untersucht.

18. Vorrichtung nach Anspruch 16, **gekennzeichnet durch** eine Bestimmungseinrichtung (406), die den Schwellenwert nach Maßgabe der Fahrzeuggeschwindigkeit bestimmt.

19. Vorrichtung nach einem der vorherigen Ansprüche 14 - 18, **gekennzeichnet durch** eine Ermittlungseinrichtung (402), die die Kurveninnenseite anhand eines Signals eines nicht angetriebenen linksseitigen Rades und eines nicht angetriebenen rechtsseitigen Rades ermittelt.

20. Vorrichtung nach Anspruch 19, **dadurch gekennzeichnet, daß** die Ermittlungseinrichtung die Geschwindigkeiten der Räder an der Hinterachse betrachtet.

21. Vorrichtung nach einem der vorherigen Ansprüche 14 - 20, **gekennzeichnet durch** eine dritte Vergleichseinrichtung (411), die die Radgeschwindigkeit zumindest eines linksseitigen Rades mit der Radgeschwindigkeit zumindest eines rechtsseitigen Rades vergleicht, und wobei die Erkennungseinrichtung eine kritische Bremsung erkennt, wenn die Radgeschwindigkeiten über eine bestimmte oder bestimmbare Zeitdauer entsprechend einem bestimmten Muster voneinander abweichen.

22. Vorrichtung nach einem der vorherigen Ansprüche 14 - 21, **dadurch gekennzeichnet, daß** sie im Teilbremsbereich wirkt und im Vollbremsbereich außer Betrieb gesetzt wird.

23. Vorrichtung zum Steuern des Bremsdrucks zumindest eines Rades bei einer kritischen Bremsung eines zweispurigen Fahrzeugs während der Kurvenfahrt,
**gekennzeichnet durch** eine Vorrichtung (313) zum Erkennen einer kritischen Bremsung des Fahrzeugs während der Kurvenfahrt, nach einem der vorherigen Ansprüche 14 - 22, eine Einrichtung (402) zum Ermitteln eines kurveninnenseitigen Rades anhand von Signalen eines nicht angetriebenen linksseitigen Rades und eines nicht angetriebenen rechtsseitigen Rades, und
eine Veränderungseinrichtung (315) zum Absenken des Bremsdruckes eines kurveninnenseitigen Rades auf die Erkennung hin.

24. Vorrichtung nach Anspruch 23, **dadurch gekennzeichnet, daß** die Veränderungseinrichtung den Betrag der Absenkung nach Maßgabe der Fahrzeugverzögerung wählt.

25. Vorrichtung nach einem der vorherigen Ansprüche 14 - 24, **dadurch gekennzeichnet, daß** die Veränderungseinrichtung den abgesenkten Druck eine bestimmte oder bestimmbare Zeit hält und dann wieder aufbaut.

26. Vorrichtung nach Anspruch 25, **dadurch gekennzeichnet, daß** die Veränderungseinrichtung den Druck weiter absenkt, wenn nach einer Absenkung der Schlupf nicht einen bestimmten oder bestimmbaren Wert unterschreitet.

## Claims

1. A method of improving the stability of a two-track vehicle during a partially braked cornering manoeuvre where ABS control does not yet take place, with the steps of detecting the running behaviour of at least one left-hand side and one right-hand side wheel each, **characterized by** judging the braking situation in the partial braking operation by a comparison of the running behaviour of at least one left-hand side wheel with that of a right-hand side wheel, and/or by the evaluation of the time variation of at least one left-hand side wheel and one right-hand side wheel, and by the identification of a critical braking operation in the partial braking range on the basis of the result of the comparison and/or of the result of the evaluation, by concluding tendencies of the vehicle to turn into a bend from the difference between the wheel speeds and the determined vehicle longitudinal speed, and these tendencies are assessed as critical for the partial braking range.

2. A method as claimed in claim 1, **characterized in that** the slip or the acceleration of a wheel is detected as the running behaviour of this wheel.

3. A method as claimed in claim 2, **characterized in that** at least one slip threshold value is compared with the actual slip of at least one wheel.

4. A method as claimed in claim 2 or in claim 3, **characterized in that** the time variation of the slip is checked for oscillations and **in that**, in case of certain oscillations, a critical braking operation is identified.

5. A method as claimed in claim 3, **characterized in that** the threshold value is determined in accordance with the speed of the vehicle.

6. A method as claimed in anyone of the preceding claims, **characterized in that** the inside of the bend is detected on the basis of the speeds of a non-driven left-hand side wheel and of a non-driven right-hand side wheel.

7. A method as claimed in claim 6, **characterized in that** the inside of the bend is determined on the basis of the speeds of the rear axle wheels.

8. A method as claimed in anyone of the preceding claims, **characterized in that** the wheel speed of at least one left-hand side wheel is compared with the wheel speed of at least one right-hand side wheel, and a critical braking operation is identified if the wheel speeds differ from each other, in correspondence with a determined pattern, over a determined or determinable period.

9. A method as claimed in anyone of the preceding claims, **characterized in that** it starts within the partial braking range and is not implemented within the brakes' fully applied range.

10. A method of controlling the braking pressure of at least one wheel in a critical braking operation of a two-track vehicle during cornering, **characterized by** the steps of identifying a critical braking operation of the vehicle during cornering, using a method as claimed in anyone of the preceding claims; determining a wheel on the inside of the bend on the basis of the speeds of a non-driven left-hand side wheel and of a non-driven right-hand side wheel; and reducing the braking pressure on one or on both wheels on the inside of the bend in response to identification.

11. A method as claimed in claim 10, **characterized in that** the amount of reduction is selected in accordance with the deceleration of the vehicle.

12. A method as claimed in anyone of the preceding claims 10 or 11,
**characterized in that** the reduced pressure is maintained for a determined or determinable time and then is built up again.

13. A method as claimed in claim 12, **characterized in that** the pressure is further reduced if, after a reduction, the slip does not lie below a determined or determinable value.

14. A device for improving the stability of a two-track vehicle during a partially braked cornering manoeuvre where ABS control does not yet take place, provided with a detecting device (403a, b, 408a, b) for detecting the running behaviour of at least one left-hand side and one right-hand side wheel each (301a - d), **characterized by** a right-hand side wheel each (301a - d), **characterized by** a first comparing device (409 - 412) for comparing the running behaviour of at least one left-hand side wheel with that of a right-hand side wheel, and/or by an evaluating device (404 - 407) for evaluating the time variation of at least one left-hand side wheel and one right-hand side wheel, and by an identifying device (413) for identifying a critical braking operation on the basis of the output of the comparing device and/or of the output of the evaluating device, by concluding tendencies of the vehicle to turn into a bend from the difference between the wheel speeds and the determined vehicle longitudinal speed, and these tendencies are assessed as critical for the partial braking range.

15. A device as claimed in claim 14, **characterized in that** the detecting device (403a, b, 408a, b) detects the slip and/or the acceleration of the watched wheels.

16. A device as claimed in claim 15, **characterized in that** the evaluating device (404 - 407) includes a second comparing device (405) comparing a slip threshold value with the actual slip of at least one wheel.

17. A device as claimed in claim 15 or in claim 16, **characterized in that** the evaluating device (404 - 407) checks the time variation of the slip for oscillations.

18. A device as claimed in claim 16, **characterized by** a determining device (406) determining the threshold value in accordance with the speed of the vehicle.

19. A device as claimed in anyone of the preceding claims 14 to 18, **characterized by** a detecting device (402) detecting the inside of the bend on the basis of a signal of a non-driven left-hand side wheel and of a non-driven right-hand side wheel.

20. A device as claimed in claim 19,
**characterized in that** the detecting device watches the speeds of the rear-axle wheels.

21. A device as claimed in anyone of the preceding claims 14 to 20,
**characterized by** a third comparing device (411) comparing the wheel speed of at least one left-hand side wheel with the wheel speed of at least one right-hand side wheel, and with the identifying device identifying a critical braking operation if the wheel speeds differ from each other, in correspondence with a determined pattern, over a determined or determinable period.

22. A device as claimed in anyone of the preceding claims 14 to 21,
**characterized in that** it is active within the partial braking range and is put out of operation in the brakes' fully applied range.

23. A device for controlling the braking pressure of at least one wheel in a critical braking operation of a two-track vehicle during cornering, **characterized by** a device (313) for identifying a critical braking operation of the vehicle during cornering, as claimed in anyone of the preceding claims 14 to 22; by a device (402) for detecting a wheel on the inside of the bend on the basis of signals of a non-driven left-hand side wheel and a non-driven right-hand side wheel; and by a modifying device (315) for reducing the braking pressure of a wheel on the inside of the bend in response to identification.

24. A device as claimed in claim 23,
**characterized in that** the modifying device selects the amount of reduction in accordance with the deceleration of the vehicle.

25. A device as claimed in anyone of the preceding claims 14 to 24,
**characterized in that** the modifying device maintains the reduced pressure for a determined or determinable time and then builds it up again.

26. A device as claimed in claim 25,
**characterized in that** the modifying device reduces the pressure further if, after a reduction, the slip does not lie below a determined or determinable value.

## Revendications

1. Procédé pour améliorer la stabilité d'un véhicule à deux voies pendant une conduite en courbe à freinage partiel dans laquelle aucune régulation ABS n'intervient encore, avec pour étape la détermination du comportement au roulement d'au moins une roue côté gauche et d'une roue côté droit,
**caractérisé par** une appréciation de la situation de freinage lors du freinage partiel, par comparaison du comportement au roulement d'au moins une roue côté gauche à celui d'une roue côté droit et/ou par exploitation de l'allure temporelle d'au moins une roue côté gauche et d'une roue côté droit, et reconnaissance d'un freinage critique dans le domaine du freinage partiel à l'aide du résultat de la comparaison et/ou du résultat de l'exploitation, en ce qu'à partir des différences des vitesses des roues et de la vitesse longitudinale déterminée du véhicule, on conclut à des tendances à la rotation vers l'intérieur du véhicule et celles-ci sont classées comme critiques pour le domaine du freinage partiel.

2. Procédé selon la revendication 1, **caractérisé en ce que** comme comportement du roulement d'une roue son patinage ou son accélération est déterminée.

3. Procédé selon la revendication 2, **caractérisé en ce qu'**au moins une valeur de seuil du patinage est comparée au patinage effectif d'au moins une roue.

4. Procédé selon la revendication 2 ou 3, **caractérisé en ce que** la variation dans le temps du patinage est examinée quant aux oscillations et un freinage critique est reconnu en cas d'oscillations déterminées.

5. Procédé selon la revendication 3, **caractérisé en ce que** la valeur de seuil est déterminée en fonction de la vitesse du véhicule.

6. Procédé selon l'une des revendications précédentes, **caractérisé en ce que** le côté intérieur de la courbe est déterminé à l'aide des vitesses d'une roue côté gauche non motrice et d'une roue côté droit non motrice.

7. Procédé selon la revendication 6, **caractérisé en ce que** le côté intérieur de la courbe est déterminé à l'aide des vitesses des roues sur l'essieu arrière.

8. Procédé selon l'une des revendications précédentes, **caractérisé en ce que** la vitesse de roue d'au moins une roue côté gauche est comparée à la vitesse de roue d'au moins une roue côté droit, et un freinage critique est reconnu lorsque les vitesses des roues s'écartent l'une de l'autre, conformément à un modèle déterminé, sur une durée déterminée ou à déterminer.

9. Procédé selon l'une des revendications précédentes, **caractérisé en ce qu'**il est commencé dans le domaine du freinage partiel et n'est pas exécuté dans le domaine du freinage total.

10. Procédé de commande de la pression de freinage d'au moins une roue lors d'un freinage critique d'un véhicule à deux voies pendant la conduite en courbe, **caractérisé par** les étapes de la reconnaissance d'un freinage critique du véhicule pendant la conduite en courbe, avec un procédé selon l'une des revendications précédentes,
détermination d'une roue côté intérieur à la courbe à l'aide des vitesses d'une roue côté gauche non directrice et d'une roue côté droit non motrice, et abaissement de la pression de freinage sur l'une ou les deux roues côté intérieur à la courbe à la suite de la reconnaissance.

11. Procédé selon la revendication 10, **caractérisé en ce que** la valeur de l'abaissement est choisie en fonction du ralentissement du véhicule.

12. Procédé selon l'une des revendications 10 ou 11 précédentes, **caractérisé en ce que** la pression abaissée est maintenue pendant un temps déterminé ou qui peut être déterminé puis est à nouveau relevée.

13. Procédé selon la revendication 12, **caractérisé en ce que** la pression est encore abaissée si après un abaissement le patinage ne sous-dépasse pas une valeur déterminée ou à déterminer.

14. Dispositif pour améliorer la stabilité d'un véhicule à deux voies pendant une conduite en courbe à freinage partiel, au cours de laquelle une régulation ABS n'a pas encore lieu, comportant un dispositif de détermination (403a, b, 408a, b) pour déterminer le comportement au roulement d'au moins une roue côté gauche et d'une roue côté droit (301a-d),
**caractérisé par** un premier dispositif de comparaison (409-412) pour la comparaison du comportement au roulement d'au moins une roue côté gauche à une roue côté droit et/ou un dispositif d'exploitation (404-407) pour l'exploitation de l'allure temporelle d'au moins une roue côté gauche et d'une roue côté droit, et un dispositif de reconnaissance (413) pour reconnaître un freinage critique à l'aide de la sortie du dispositif de comparaison et/ou de la sortie du dispositif d'exploitation, en ce qu'à partir de la différence des vitesses des roues et de la vitesse longitudinale déterminée du véhicule, on conclut à des tendances à la rotation vers l'intérieur du véhicule et celles-ci sont classées comme critiques pour le domaine du freinage partiel.

15. Dispositif selon la revendication 14, **caractérisé en ce que** le dispositif de détermination (403a, b, 408a, b) détermine le patinage et/ou l'accélération des roues considérées.

16. Dispositif selon la revendication 15, **caractérisé en ce que** le dispositif d'exploitation (404-407) comporte un deuxième dispositif de comparaison (405) qui compare une valeur de seuil du patinage au patinage effectif d'au moins une roue.

17. Dispositif selon la revendication 15 ou 16,
**caractérisé en ce que** le dispositif d'exploitation (404-407) examine la variation dans le temps du patinage quant aux oscillations.

18. Dispositif selon la revendication 16, **caractérisé par** un dispositif de détermination (406) qui détermine la valeur de seuil en fonction de la vitesse du véhicule.

19. Dispositif selon l'une des revendications 14 à 18 précédentes, **caractérisé par** un dispositif de détermination (402) qui détermine le côté intérieur de la courbe à l'aide d'un signal d'une roue côté gauche non motrice et d'une roue côté droit non motrice.

20. Dispositif selon la revendication 19, **caractérisé en ce que** le dispositif de détermination considère les vitesses des roues sur l'essieu arrière.

21. Dispositif selon l'une des revendications 14 à 20 précédentes, **caractérisé par** un troisième dispositif de comparaison (411) qui compare la vitesse de roue d'au moins une roue côté gauche à la vitesse de roue d'au moins une roue côté droit, et le dispositif de reconnaissance reconnaissant un freinage critique lorsque les vitesses des roues s'écartent l'une de l'autre conformément à un modèle déterminé pendant une durée déterminée ou à déterminer.

22. Dispositif selon l'une des revendications 14 à 21 précédentes, **caractérisé en ce qu'**il agit dans le domaine du freinage partiel et est désactivé dans le domaine du freinage complet.

23. Dispositif de commande de la pression de freinage d'au moins une roue lors d'un freinage critique d'un véhicule à deux voies pendant la conduite en courbe,
**caractérisé par** un dispositif (313) pour la reconnaissance d'un freinage critique du véhicule pendant la conduite en courbe, selon l'une des revendications 14 à 22 précédentes, un dispositif (402) pour déterminer une roue côté intérieur à la courbe à l'aide de signaux d'une roue côté gauche non motrice et d'une roue côté droit non motrice, ainsi que par un dispositif de variations (315) pour abaisser la pression de freinage d'une roue côté intérieur à la courbe à la suite de la reconnaissance.

24. Dispositif selon la revendication 23, **caractérisé en ce que** le dispositif de variations choisit la valeur de l'abaissement en fonction du ralentissement du véhicule.

25. Dispositif selon l'une des revendications 14 à 245 précédentes, **caractérisé en ce que** le dispositif de variations maintient la pression abaissée pendant un temps déterminé ou à déterminer puis la relève à nouveau.

26. Dispositif selon la revendication 25, **caractérisé en ce que** le dispositif de variation continue d'abaisser la pression si après un abaissement le patinage ne sous-dépasse pas une valeur déterminée ou à déterminer.
